# FASCICULE DE BREVET EUROPEEN

(11) **EP 0 753 930 B1**
(45) Date de publication et mention de la délivrance du brevet: **03.11.1999**
(21) Numéro de dépôt: 96401395.7
(22) Date de dépôt: 25.06.1996
(51) Int. Cl.: H02K 5/10

(54) **Alternateur de véhicule automobile muni de moyens d'obturation de son orifice d'alimentation en air de refroidissement**
Kraftfahrzeugwechselstromgenerator mit Mittel zum Abdecken der Kühlluftzuführöffnung
Car alternator with means for blocking the cooling air entrance opening

(30) Priorité: 12.07.1995 FR 9508590
(43) Date de publication de la demande: 15.01.1997
(73) Titulaire: VALEO EQUIPEMENTS ELECTRIQUES MOTEUR, 94000 Créteil (FR)
(72) Inventeur: Desenclos, Stéphane, 62200 Boulogne (FR)
(74) Mandataire: Kohn, Philippe

(56) Documents cités:
- FR-A- 2 670 069
- FR-A- 2 703 852
- US-A- 4 314 831

## Description

L'invention concerne un alternateur de véhicule automobile.

L'invention concerne plus particulièrement un alternateur de véhicule automobile, du type dans lequel de l'air frais de refroidissement est admis au travers d'un orifice d'un capot de l'alternateur, du type dans lequel l'air frais est acheminé jusqu'à l'orifice du capot par un tube, du type dans lequel un adaptateur, qui est interposé entre le tube et le capot, comporte une entrée de liaison avec le tube et une sortie de raccordement avec le capot, et du type dans lequel il est prévu un cache amovible destiné à obturer au moins partiellement l'orifice du capot, avant le montage de l'adaptateur et du tube.

Afin de refroidir l'alternateur, il est généralement prévu un ventilateur, entraîné par le rotor de l'alternateur, qui établit à l'intérieur de l'alternateur la circulation d'un flux d'air de refroidissement qui est admis et refoulé au travers d'orifices d'aération aménagés dans les différents capots et carters de l'alternateur.

Dans certains cas, l'alternateur est implanté sur le véhicule de telle manière que l'air environnant est porté à haute température par le groupe motopropulseur et empêche un refroidissement correct de l'alternateur.

Dans ce cas, on prévoit généralement d'alimenter l'alternateur en air frais par l'intermédiaire d'un tube, également appelé boa ou manche, qui puise de l'air frais dans un endroit où il n'est pas réchauffé par le groupe motopropulseur et qu'il achemine jusqu'à un orifice pratiqué par exemple sur un capot d'extrémité axiale de l'alternateur.

Afin de permettre une standardisation des capots et des tubes, il est généralement interposé entre le tube et le capot un adaptateur qui permet d'adapter l'angle d'arrivée du tube par rapport à l'alternateur en fonction de l'implantation de ce dernier et du tube sur le véhicule.

On s'est aperçu qu'en cours de montage de l'alternateur sur le véhicule, avant le branchement de l'adaptateur et du tube, il était possible que des corps étrangers pénètrent à l'intérieur du carter de l'alternateur par l'orifice principal d'alimentation en air frais du capot d'extrémité axiale de l'alternateur.

Pour répondre à ce problème, il a été proposé de disposer un cache amovible d'obturation sur l'orifice d'admission du capot d'extrémité axiale, ce cache étant enlevé au moment du montage de l'adaptateur ou du tube.

Toutefois, sur certaines chaînes de montage de véhicules, il s'écoule un certain laps de temps entre le montage de l'adaptateur et le branchement du tube sur l'adaptateur, laps de temps au cours duquel des corps étrangers sont susceptibles de pénétrer à l'intérieur du carter d'alternateur via l'adaptateur et l'orifice d'admission d'air du capot d'extrémité axiale.

Dans le but d'apporter une solution à ce problème, l'invention propose un alternateur du type vu précédemment, caractérisé en ce que le cache amovible est susceptible d'être monté sur l'entrée de l'adaptateur afin d'en obturer l'entrée lorsque l'adaptateur est assemblé sur la capot et avant le montage du tube sur l'adaptateur.

Selon d'autres caractéristiques de l'invention :
- le cache amovible est susceptible d'être fixé sur le capot et sur l'entrée de l'adaptateur par des moyens d'emboîtement ;
- l'adaptateur est fixé sur le capot par des moyens d'emboîtement et le cache amovible est muni de moyens d'emboîtement identiques qui permettent sa fixation sur le capot ;
- l'adaptateur est fixé sur le capot par des moyens d'emboîtement et le cache amovible est muni de moyens d'emboîtement identiques qui permettent sa fixation sur le capot et sur l'adaptateur ;
- le cache amovible est une plaque qui comporte sur chacune de ses deux faces des moyens d'emboîtement élastique pour sa fixation respectivement sur le capot et sur l'adaptateur ;
- le cache amovible comporte une collerette qui s'étend perpendiculairement sur une de ses faces, et qui est emboîté élastiquement dans une gorge complémentaire du capot pour la fixation du cache sur le capot ;
- le cache amovible comporte, sur une des ses faces, une excroissance de forme complémentaire de l'entrée de l'adaptateur dans laquelle l'excroissance est emboîtée élastiquement pour la fixation du cache sur l'adaptateur ;
- lorsque le cache amovible est en place sur le capot, il interdit le montage de l'adaptateur sur le capot ;
- lorsque le cache amovible est en place l'adaptateur, il interdit le montage du tube sur l'adaptateur ;
- le cache amovible est muni de moyens de préhension qui en permettent un démontage aisé ;
- les moyens d'emboîtement sont des moyens d'emboîtement élastique ;
- le cache amovible est réalisé en matériau déformable élastiquement.

Les caractéristiques et avantages de l'invention apparaîtront à la lecture de la description détaillée qui suit pour la compréhension de laquelle on se reportera aux dessins annexés dans lesquels :
- La figure 1 est une vue générale d'un alternateur muni d'un adaptateur monté sur un capot d'extrémité axiale de l'alternateur ;
- les figures 2 et 3 sont des vues schématiques en perspective du montage d'un cache amovible selon l'invention sur l'orifice d'admission d'air d'un capot d'extrémité axiale d'alternateur ;
- les figures 4 et 5 sont des vues schématiques en perspective du montage du cache amovible selon l'invention sur un adaptateur.

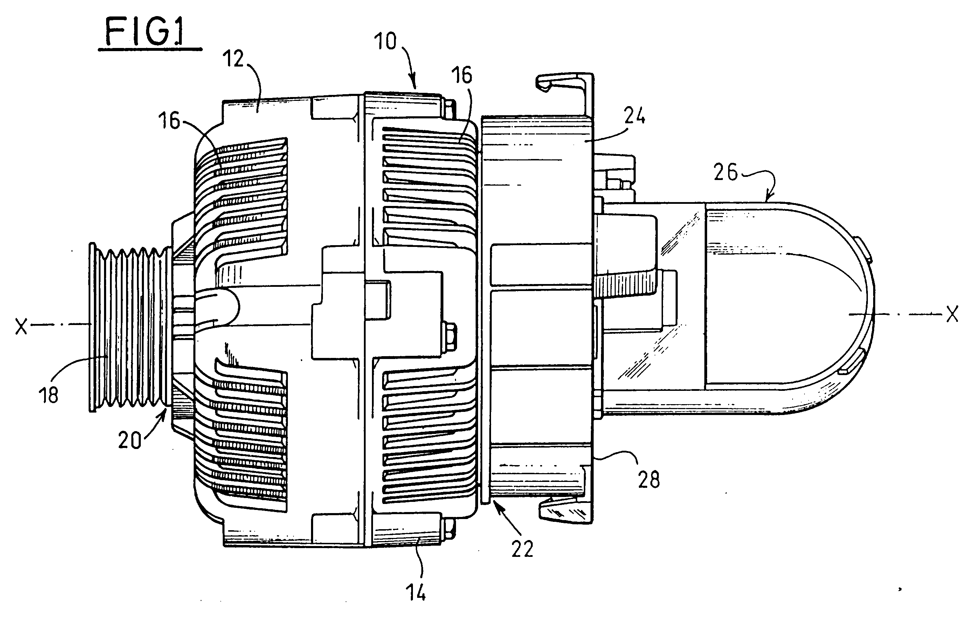

L'alternateur 10 représenté sur la figure 1 comporte un carter sensiblement cylindrique d'axe X-X en deux parties 12 et 14 qui sont chacune munies d'ouïes d'aération 16.

Le rotor (non représenté) de l'alternateur est entraîné en rotation par l'intermédiaire d'une poulie 18 agencée à une première extrémité axiale 20 de l'alternateur 10.

A sa seconde extrémité axiale 22, l'alternateur 10 comporte un dispositif (non représenté) de régulation de tension qui est protégé par un capot d'extrémité axiale 24.

Un adaptateur 26, monté sur face axiale externe 28 du capot 24, est destiné au raccordement d'un tube d'alimentation d'air frais (non représenté).

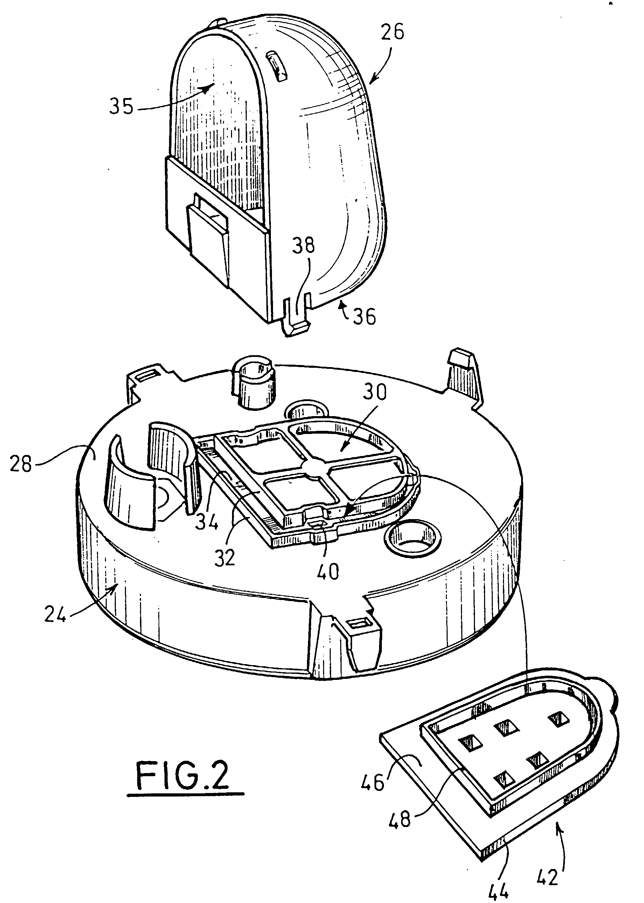

Comme on peut le voir plus particulièrement sur la figure 2, la face axiale 28 du capot 24 est munie d'un orifice 30 d'alimentation en air frais sur lequel l'adaptateur 26 est susceptible d'être monté.

Autour de l'orifice, on a aménagé deux nervures parallèles 32 de faible hauteur qui s'étendent axialement depuis la face axiale 28 et qui délimitent entre elles une gorge 34.

L'adaptateur 26 comporte une sortie de raccordement 36 dont la forme est complémentaire de celle de la gorge 34 et qui est prévue pour s'emboîter dans la gorge 34 afin d'assurer le positionnement de l'adaptateur 26 sur le capot 24.

Des crochets élastiques 38 de fixation de l'adaptateur 26 sont agencés axialement sur la sortie de raccordement 36 de l'adaptateur 26 et sont prévus pour coopérer avec des encoches 40 agencées au fond de la gorge 34 du capot 24.

Il est prévu un cache amovible 42 qui est destiné à obturer l'orifice 30 du capot 24 de manière à empêcher toute pénétration de corps étrangers à l'intérieur de l'alternateur 10 en cours de montage de ce dernier sur le véhicule, lorsque l'adaptateur 26 n'est pas encore installé sur le capot 24.

Comme on peut le voir, le cache amovible 42 comporte une plaque 44 de forme sensiblement similaire à celle de l'orifice mais de taille supérieure.

Sur une première face 46 de la plaque 44, est agencée une collerette 48 dont la forme est complémentaire de celle de la gorge 34 du capot 24 afin de pouvoir s'emboîter élastiquement à l'intérieur de cette gorge pour fixer le cache amovible 42 sur le capot 24. A cet effet, le cache 42 peut être réalisé par moulage en matériau souple.

On pourra prévoir de dimensionner la collerette 48 de manière à ce qu'elle s'emboîte dans la gorge 34 avec serrage. A titre de variante, le cache est en matériau rigide et on prévoit de munir la collerette 48 de crochets élastiques similaires aux crochets 38 de l'adaptateur 26 pour coopérer avec les encoches 40 de la gorge 34 afin de réaliser une fixation plus fiable du cache 42 sur le capot 24.

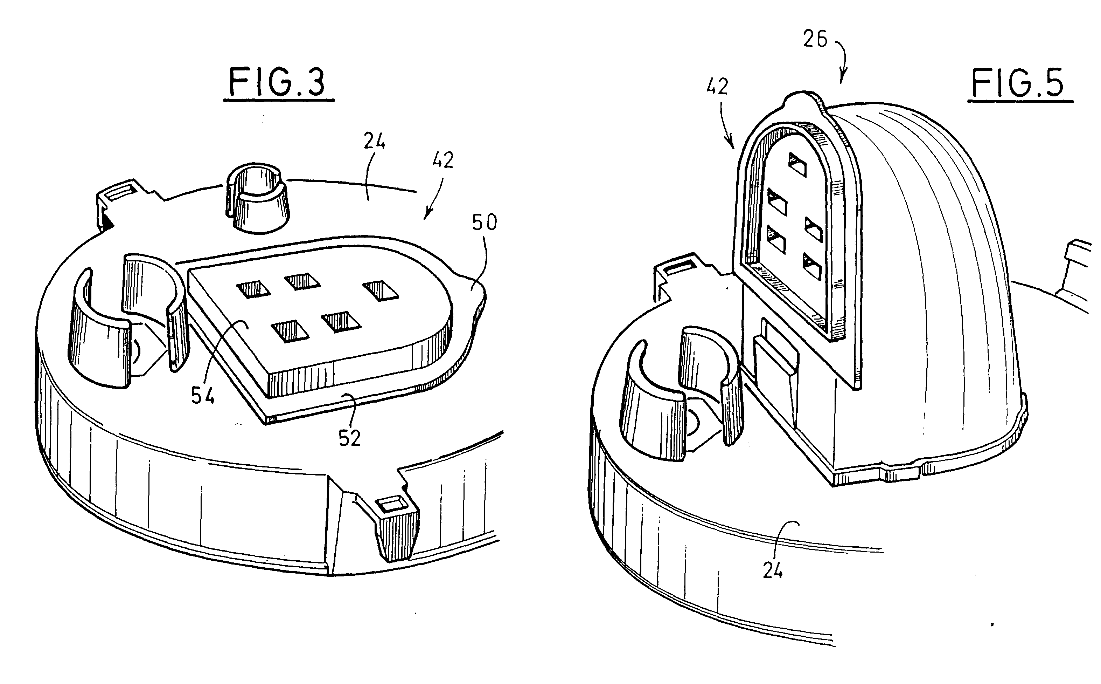

Comme on peut le voir sur la figure 3, la plaque 44 du cache 42 s'étend au-delà des nervures 32 du capot 24 contre lesquelles elle est en appui axial de sorte que l'opérateur peut facilement saisir les bords de la plaque 44 pour retirer le cache 42 du capot 24.

A titre complémentaire, on a prévu une languette 50 qui prolonge localement la plaque 44 et qui constitue un organe de préhension complémentaire.

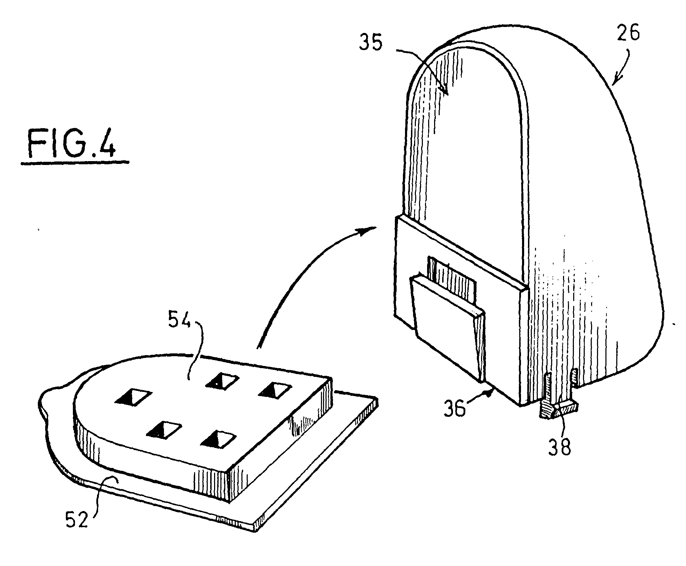

On a représenté sur les figures 4 et 5 l'adaptateur 26 monté sur le capot 24.

Sur la figure 4, on voit que l'entrée de liaison 35 de l'adaptateur 26 est susceptible de laisser pénétrer des corps étrangers à l'intérieur de l'alternateur 10.

Conformément aux enseignements de l'invention, il est prévu de monter le cache amovible 42 sur l'entrée de liaison 35 de l'adaptateur 26 pour se prémunir contre ce risque.

A cet effet, le cache amovible 42 comporte sur sa seconde face 52 une excroissance 54 qui s'étend axialement et dont le profil correspond à celui de l'entrée de liaison 35 de l'adaptateur 26.

Le cache amovible 42 est ainsi susceptible d'être emboîté élastiquement dans l'entrée 35, ainsi que cela est représenté sur la figure 5.

On voit aussi que la plaque 44 du cache 42 est prévu d'une taille supérieure à celle de l'entrée 35 de l'adaptateur 26 de manière à faciliter le démontage du cache 42 au moment de l'assemblage du tube d'alimentation d'air frais sur l'adaptateur 26.

Conformément à un autre aspect de l'invention, il est impossible de monter l'adaptateur sur le capot tant que le cache amovible 42 obture l'orifice 30 et, de la même manière, il est impossible de monter le tube d'alimentation sur l'adaptateur 26 tant que le cache amovible 42 en obture l'entrée de liaison 35.

Ainsi, on évitera toutes possibilités de laisser subsister par mégarde le cache 42 sur le capot ou sur l'adaptateur ce qui, en cours d'utilisation de l'alternateur 10, serait fatal à son bon fonctionnement.

Cette conception d'un cache amovible permet de ne pas modifier le capot 24 et l'adaptateur 26 pour le cas où l'orifice 30 du capot 24 n'a pas la même géométrie que l'entrée 35 de l'adaptateur 26.

Toutefois, dans le but de simplifier cette conception, on pourra prévoir que l'orifice 30 et l'entrée 35 sont de forme identique, auquel cas le cache amovible 42 pourra ne comporter qu'un moyen de fixation.

## Revendications

1. Alternateur de véhicule automobile, du type dans lequel de l'air frais de refroidissement est admis au travers d'un orifice (30) d'un capot (24) de l'alternateur (10), du type dans lequel l'air frais est acheminé jusqu'à l'orifice (30) du capot (24) par un tube, du type dans lequel un adaptateur (26), qui est interposé entre le tube et le capot (24), comporte une entrée de liaison (35) avec le tube et une sortie de raccordement (36) avec l'orifice (30) du capot (24), et du type dans lequel il est prévu un cache amovible (42) destiné à obturer au moins partiellement l'orifice (30) du capot (24), avant le montage de l'adaptateur (26) et du tube, caractérisé en ce que le cache amovible (42) est susceptible d'être monté sur l'entrée (35) de l'adaptateur (26) afin d'en obturer l'entrée (35) lorsque l'adaptateur (26) est assemblé sur le capot (24) et avant le montage du tube sur l'adaptateur (26).

2. Alternateur selon la revendication 1, caractérisé en ce que le cache amovible (42) est susceptible d'être fixé sur le capot (24) et sur l'entrée (35) de l'adaptateur (26) par des moyens d'emboîtement.

3. Alternateur selon la revendication 2, caractérisé en ce que l'adaptateur (26) est fixé sur le capot (24) par des moyens d'emboîtement et en ce que le cache amovible (42) est muni de moyens d'emboîtement identiques qui permettent sa fixation sur le capot (24).

4. Alternateur selon la revendication 2, caractérisé en ce que l'adaptateur (26) est fixé sur le capot (24) par des moyens d'emboîtement et en ce que le cache amovible (42) est muni de moyens d'emboîtement identiques qui permettent sa fixation sur le capot (24) et sur l'adaptateur (26).

5. Alternateur selon l'une des revendications 2 ou 3, caractérisé en ce que le cache amovible (42) est une plaque (44) qui comporte sur chacune de ses deux faces (46, 52) des moyens d'emboîtement élastique pour sa fixation respectivement sur le capot (24) et sur l'adaptateur (26).

6. Alternateur selon la revendication 5, caractérisé en ce que le cache amovible (42) comporte une collerette (48) qui s'étend perpendiculairement sur une de ses faces (46), et qui est emboîté élastiquement dans une gorge complémentaire (34) du capot (24) pour la fixation du cache (42) sur le capot (24).

7. Alternateur selon l'une des revendications 5 ou 6, caractérisé en ce que le cache amovible (42) comporte, sur une des ses faces (52), une excroissance (54) de forme complémentaire de l'entrée (35) de l'adaptateur (26) dans laquelle l'excroissance (54) est emboîtée élastiquement pour la fixation du cache (42) sur l'adaptateur (26).

8. Alternateur selon l'une quelconque des revendications précédentes, caractérisé en ce que, lorsque le cache amovible (42) est en place sur le capot (24), il interdit le montage de l'adaptateur (26) sur le capot (24).

9. Alternateur selon l'une quelconque des revendications précédentes, caractérisé en ce que, lorsque le cache amovible (42) est en place l'adaptateur (26), il interdit le montage du tube sur l'adaptateur (26).

10. Alternateur selon l'une quelconque des revendications précédentes, caractérisé en ce que le cache amovible (42) est muni de moyens de préhension qui en permettent un démontage aisé.

11. Alternateur selon l'une quelconque des revendications 2 à 10, caractérisé en ce que les moyens d'emboîtement sont des moyens d'emboîtement élastique.

12. Alternateur selon l'une quelconque des revendications précédentes, caractérisé en ce que le cache amovible (42) est réalisé en matériau déformable élastiquement.

## Patentansprüche

1. Wechselstromgenerator für Kraftfahrzeuge, bei dem Kühlluft durch eine Öffnung (30) einer Abschlußkappe (24) des Wechselstromgenerators (10) zugeführt wird, wobei die Frischluft durch ein Rohr bis zur Öffnung (30) der Abschlußkappe (24) geleitet wird, wobei ein Anpaßstück (26), das zwischen dem Rohr und der Abschlußkappe (24) eingefügt ist, einen Eingang (35) zur Verbindung mit dem Rohr und einen Ausgang (36) zum Anschluß an die Öffnung (30) der Abschlußkappe (24) umfaßt und wobei eine abnehmbare Abdeckung (42) vorgesehen ist, die dazu bestimmt ist, die Öffnung (30) der Abschlußkappe (24) vor der Montage des Anpaßstücks (26) und des Rohrs wenigstens teilweise abzudecken, **dadurch gekennzeichnet,** daß die abnehmbare Abdeckung (42) am Eingang (35) des Anpaßstücks (26) angebracht werden kann, um seinen Eingang (35) zu verschließen, wenn das Anpaßstück (26) an der Abschlußkappe (24) angefügt wird und bevor die Montage des Rohrs am Anpaßstück (26) erfolgt.

2. Wechselstromgenerator nach Anspruch 1, **dadurch gekennzeichnet**, daß die abnehmbare Abdeckung (42) an der Abschlußkappe (24) und am Eingang (35) des Anpaßstücks (26) durch Einpaßmittel befestigt werden kann.

3. Wechselstromgenerator nach Anspruch 2, **dadurch gekennzeichnet,** daß das Anpaßstück (26) an der Abschlußkappe (24) durch Einpaßmittel befestigt wird und daß die abnehmbare Abdeckung (42) mit identischen Einpaßmitteln versehen ist, die ihre Befestigung an der Abschlußkappe (24) ermöglichen.

4. Wechselstromgenerator nach Anspruch 2, **dadurch gekennzeichnet,** daß das Anpaßstück (26) an der Abschlußkappe (24) durch Einpaßmittel befestigt wird und daß die abnehmbare Abdeckung (42) mit identischen Einpaßmitteln versehen, die ihre Befestigung an der Abschlußkappe (24) und am Anpaßstück (26) ermöglichen.

5. Wechselstromgenerator nach einem der Ansprüche 2 oder 3, **dadurch gekennzeichnet,** daß die abnehmbare Abdeckung (42) eine Platte (44) ist, die auf jeder ihrer beiden Flächen (46, 52) elastische Einpaßmittel für ihre Befestigung an der Abschlußkappe (24) bzw. am Anpaßstück (26) umfaßt.

6. Wechselstromgenerator nach Anspruch 5, **dadurch gekennzeichnet,** daß die abnehmbare Abdeckung (42) einen Kragen (48) umfaßt, der sich senkrecht auf einer ihrer Flächen (46) erstreckt und der zur Befestigung der Abdeckung (42) auf der Abschlußkappe (24) elastisch in eine formschlüssige Auskehlung (34) der Abschlußkappe (24) eingepaßt wird.

7. Wechselstromgenerator nach einem der Ansprüche 5 oder 6, **dadurch gekennzeichnet,** daß die abnehmbare Abdeckung (42) auf einer ihrer Flächen (52) eine Ausstülpung (54) in formschlüssiger Gestaltung mit dem Eingang (35) des Anpaßstücks (26) umfaßt, in den die Ausstülpung (54) zur Befestigung der Abdeckung (42) auf der Abschlußkappe (26) elastisch eingepaßt wird.

8. Wechselstromgenerator nach einem der vorangehenden Ansprüche, **dadurch gekennzeichnet,** daß die abnehmbare Abdeckung (42), wenn sie an der Abschlußkappe (24) eingesetzt ist, die Anbringung des Anpaßstücks (26) an der Abschlußkappe (24) verhindert.

9. Wechselstromgenerator nach einem der vorangehenden Ansprüche, **dadurch gekennzeichnet,** daß die abnehmbare Abdeckung (42), wenn sie am Anpaßstück (26) eingesetzt ist, die Anbringung des Rohrs am Anpaßstück (26) verhindert.

10. Wechselstromgenerator nach einem der vorangehenden Ansprüche, **dadurch gekennzeichnet**, daß die abnehmbare Abdeckung (42) mit Greifmitteln versehen ist, die ihren einfachen Ausbau ermöglichen.

11. Wechselstromgenerator nach einem der Ansprüche 2 bis 10, **dadurch gekennzeichnet,** daß die Einpaßmittel elastische Einpaßmittel sind.

12. Wechselstromgenerator nach einem der vorangehenden Ansprüche, **dadurch gekennzeichnet,** daß die abnehmbare Abdeckung (42) aus einem elastisch verformbaren Werkstoff ausgeführt ist.

## Claims

1. A motor vehicle alternator, of the type in which fresh cooling air is admitted through an aperture (30) in an end cap (24) of the alternator (10), of the type in which the fresh air is led to the aperture (30) in the end cap (24) through a tube, of the type in which an adapter (26), which is interposed between the tube and the end cap (24), includes an inlet (35) for connection with the tube and an outlet (36) for connection with the aperture (30) in the end cap (24), and of the type in which a removable cover (42) is provided, which is adapted to obturate at least partly the aperture (30) in the end cap (24) before the adapter (26) and the tube are fitted, characterised in that the removable cover (42) is arranged to be fitted on the inlet (35) of the adapter (26) so as to obturate the inlet (35) of the latter when the adapter (26) is assembled on the end cap (24), and before the tube is fitted on the adapter (26).

2. An alternator according to Claim 1, characterised in that the removable cover (42) is adapted to be fixed on the end cap (24) and on the inlet (35) of the adapter (26) by mating engagement means.

3. An alternator according to Claim 2, characterised in that the adapter (26) is fixed on the end cap (24) by mating engagement means, and in that the removable cover (42) is provided with identical mating engagement means which enable it to be fastened on the end cap (24).

4. An alternator according to Claim 2, characterised in that the adapter (26) is fixed on the end cap (24) by mating engagement means, and in that the removable cover (42) is provided with identical mating engagement means which enable it to be fastened on the end cap (24) and on the adapter (26).

5. An alternator according to Claim 2 or Claim 3, characterised in that the removable cover (42) is a plate (44) which has on each of its two faces (46, 52) resilient mating engagement means for fastening it on the end cap (24) and on the adapter (26) respectively.

6. An alternator according to Claim 5, characterised in that the removable cover (42) includes a collar element (48) which extends from, and at right angles to, one of its faces (46), and which is mated elastically in a complementary groove (34) of the end cap (24) for the fastening of the cover (42) on the end cap (24).

7. An alternator according to Claim 5 or Claim 6, characterised in that the removable cover (42) includes on one of its faces (52) a projecting portion (54) having a form complementary to the inlet (35) of the adapter (26), in which the projecting element (54) is elastically mated so as to fix the cover (42) on the adapter (26).

8. An alternator according to any one of the preceding Claims, characterised in that, when the removable cover (42) is in place on the end cap (24), it prevents the adapter (26) from being fitted on the end cap (24).

9. An alternator according to any one of the preceding Claims, characterised in that, when the removable cover (42) is in place on the adapter (26), it prevents the tube from being fitted on the adapter (26).

10. An alternator according to any one of the preceding Claims, characterised in that the removable cover (42) is provided with gripping means which enable it to be easily removed.

11. An alternator according to any one of Claims 2 to 10, characterised in that the mating engagement means are resilient mating engagement means.

12. An alternator according to any one of the preceding Claims, characterised in that the removable cover (42) is made of a resiliently deformable material.
